# EUROPEAN PATENT APPLICATION

(11) **EP 4 741 477 A1**
(43) Date of publication of application: **13.05.2026**
(21) Application number: 25170999.4
(22) Date of filing: 16.04.2025
(51) Int. Cl.: C11B 1/02, C11B 1/10, C11B 3/00, C11B 3/04, C11B 3/12

(54) **THERMAL HYDROLYSIS OF MICROALGAE SPECIES FOR THE PRODUCTION OF BIO-CRUDE AND OTHER BIOACTIVE MOLECULES**

(30) Priority: 07.11.2024 US 202418939649
(71) Applicant: AlGreen Limited, Shatin, N.T. (HK)
(72) Inventor: LULLA, Rehaan, Shatin, N.T. (HK); JAIN, Dhruv Manoj, Shatin, N.T. (HK); KHAN, Muhtasim Md., Shatin, N.T. (HK)
(74) Representative: Beck & Rössig European Patent Attorneys

(57) **Abstract**

The present invention discloses a method for producing biocrude and bioactive substances from microalgae biomass, comprising the steps of: mixing and stirring dry microalgae biomass with water and an acid catalyst; heating the mixture at high pressure at a temperature and time based on each individual species or processing the biomass mixture in a colloidal mill (202) with solvent; separating lysed algae cells into non-polar extracts from water-soluble extracts via vacuum filtration (102); washing the lysed algae cells and non-polar extracts with organic solvents; separating the organic solvent mixture, which comprises ethanol and long-chain fatty acids, from the remaining biochar via vacuum filtration (102); and separating the ethanol from the fatty acids via distillation or rotary evaporator (204) to extract bio-oil.

## Description

### FIELD OF THE INVENTION

The present invention relates to a thermal hydrolysis method and system for microalgae species, in particular a method and system of thermal hydrolysis for producing bio-crude and other bioactive molecules for industry.

### BACKGROUND OF THE INVENTION

It is known in the prior art that microalgae biomass could produce bio-crude for industry use. Therefore, it is crucial to produce such bio-oil from the dry microalgae biomass to produce biofuels. There are a few methods of producing said bio-crude from the microalgae biomass that are versatile, scalable, and energy efficient in recent work aiming to produce high-quality fuels. Although they could use a wide range of renewal feedstocks such as vegetable oils, animal fats and waste oil or can be scaled up or down depending on the production needs, the existing methods can be energy-extensive and require a high production cost. Therefore, there is a need to provide a simple method and system that involve low production costs to produce biocrude from microalgae biomass.

WIPO Patent No. 2012062962 A1 discloses a method for recovering lipids from microbial biomass. The method comprises providing wet microbial biomass that contains lipids for extraction without disrupting the biomass cell walls, and subsequently, extracting said wet microbial biomass with a liquid extractant at an elevated temperature of at least 170 °C and elevated pressure. The combination of temperature and pressure is such that the lipids in the cells are contacted with said extractant. Subsequently, the extracted lipids are recovered from or with the extractant. Although the method of recovering lipids from microbial biomass could recover a wide range of renewable feedstocks, including fats, oils, waxes and etc., the process is complex and may require skilled operators to operate, which increases the operational costs.

WIPO Patent No. 2013184317 A1 discloses a combined hydrothermal liquefaction (HTL) and catalytic hydrothermal gasification (CHG) system and process that convert various biomass containing sources into separable bio-oils and aqueous effluents that contain residual organics. Bio-oils may be converted to useful bio-based fuels and other chemical feedstocks. Residual organics in HTL aqueous effluents may be gasified and converted into medium-BTU product gases and directly used for process heating or to provide energy. However, the system and process are complex and may require skilled operators to operate, which increases operational costs.

WIPO Patent No. 2014022218 A1 discloses a production of hydrocarbons from select coal and algal biomass mixtures. Hydrocarbons suitable for commercial use or further refining are produced by a process that mixes an aliphatic-rich biomass and coal to obtain a feedstock. The feedstock is subjected to produce a product mixture and further separated for bio-oil or hydrocarbons. However, the system and process are complex and may require skilled operators to operate, which increases operational costs.

United States Patent No. 10077454 B1 discloses a method and system configured to convert algal biomass into biofuels, alcohols, and/or other useful by-products. The method includes an integrated biochemical and thermochemical process that provides high-purity biofuels and mixed alcohols while minimizing waste and/or maximizing efficiency. Although the method and system could provide low-cost and high-efficiency production of biofuels from algal biomass sources, the method and system are complex and may require skilled operators to operate.

Hence, there is a need to provide a simple and effective method and system of thermal hydrolysis for producing bio-crude and other bioactive molecules for industry that can require a less complex process, less manpower, and low costs.

### SUMMARY OF THE INVENTION

It is an objective of the present invention to provide an improved and simple method and system of thermal hydrolysis for producing bio-crude and other bioactive molecules that could be easily conducted at a low cost.

Accordingly, these objectives may be achieved by the subject matter set out in the claims.

### BRIEF DESCRIPTION OF THE DRAWINGS

The features of the invention will be more readily understood and appreciated from the following detailed description when read in conjunction with the accompanying drawings of the preferred embodiment of the present invention, in which:
FIG.1 illustrates a flowchart of the method of thermal hydrolysis for producing bio-crude and other bioactive molecules.
FIG.2 illustrates diagram of method for producing biocrude and bioactive substances from microalgae biomass using a colloidal mill.

### DETAILED DESCRIPTION OF THE PREFERRED EMBODIMENT

For the purposes of promoting and understanding of the principles of the invention, reference will now be made to the embodiments illustrated in the drawings and described in the following written specification. It is understood that the present invention includes any alterations and modifications to the illustrated embodiments and includes further applications of the principles of the invention as would normally occur to one skilled in the art to which the invention pertains.

The present invention teaches a method for producing biocrude and bioactive substances from microalgae biomass, comprising the steps of: mixing and stirring dry microalgae biomass with water and an acid catalyst; heating the mixture at high pressure at a temperature and time based on each individual species; separating lysed algae cells into non-polar extracts from water-soluble extracts via vacuum filtration 102; washing the lysed algae cells and non-polar extracts with organic solvents; separating the organic solvent mixture, which comprises ethanol and long-chain fatty acids, from the remaining biochar via vacuum filtration **102;** and separating the ethanol from the fatty acids via distillation or rotary evaporator **204** to extract bio-oil.

In a preferred embodiment of the present invention, the mixing of dry microalgae biomass with water is in a ratio of 1:5.

In a preferred embodiment of the present invention, the acid catalyst includes but not limited to hydrochloric acid and sulfuric acid in water in a ratio of 5:0.08.

In a preferred embodiment of the present invention, the temperature and time during the heating of the mixture comprise 100-250°C for 10-180 minutes.

In a preferred embodiment of the present invention, the heating of the mixture takes up to a maximum of 60% of the volume of a pressure vessel's capacity.

In a preferred embodiment of the present invention, the water-soluble extracts comprise proteins, amino acids, glycerin, and other bioactive molecules.

In a preferred embodiment of the present invention, the organic solvents comprise ethanol, methanol, and n-hexane in a ratio of 1:1 to 6:1 depending on the moisture and liquid composition of microalgae.

The present invention also teaches a thermal hydrolysis system of microalgae biomass for producing biocrude and bioactive substances, comprising: a high-pressure vessel; a vacuum filtration **102;** and a rotary evaporator **204.**

In a preferred embodiment of the present invention, an extraction of dry microalgae biomass in an aqueous medium is conducted in the high-pressure vessel at 100-250°C for 10-180 minutes based on each individual species to produce bio-oil and bioactive substances.

In a preferred embodiment of the present invention, the bio-oil comprises 90% long-chain free fatty acids and the bioactive substances comprise glycerin and other bioactive molecules such as docosahexaenoic acid (DHA) and eicosapentaenoic acid (EPA).

In a preferred embodiment of the present invention, the extraction further produces molecules include but not limited to 2-Pyrrolidinone, 1-Piperidinecarboxamide, 1,4-Benzenedicarboxylic acid, bis(2-ethylhexyl) ester, 3-Methyl-1,2-cyclopentanedione, and 3-Isobutylhexahydropyrrolo[1,2-a]pyrazine-1,4-dione.

The present invention also teaches a method for producing biocrude and bioactive substances from microalgae biomass, comprising the steps of: mixing and stirring dry microalgae biomass with water and an acid catalyst; processing the biomass mixture in a colloidal mill **202** with solvent; separating lysed algae cells into non-polar extracts from water-soluble extracts via vacuum filtration **102;** washing the lysed algae cells and non-polar extracts with organic solvents; separating the organic solvent mixture, which comprises ethanol and long-chain fatty acids, from the remaining biochar via vacuum filtration **102;** and separating the ethanol from the fatty acids via distillation or rotary evaporator **204** to extract bio-oil.

In a preferred embodiment of the present invention, the processing of the biomass mixture with the solvent is optimum in a ratio of 1:2 to 1:7 depending on the lipid content of the microalgae and the moisture content.

The present invention also teaches a system of microalgae biomass for producing biocrude and bioactive substances, comprising: a colloidal mill **202;** a vacuum filtration **102;** a rotary evaporator **204;** and a storage tank.

### EXAMPLE

The method and system for producing bio-crude and other bioactive molecules in the present invention are applicable to, include but are not limited to dry microalgae biomass and dewatered microalgae.

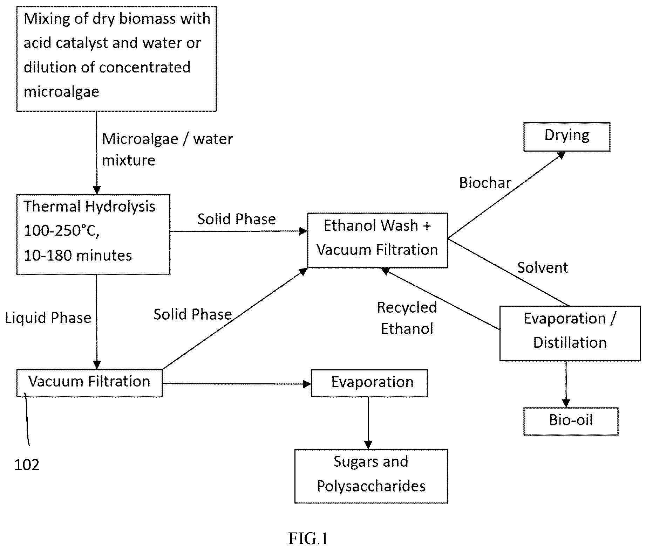

**FIG.1** illustrates a flowchart of method of thermal hydrolysis for producing bio-crude and other bioactive molecules in the present invention. A low and medium lipid microalga is used in the present invention. An example of industrial microalgae includes but is not limited to Chlorella Vulgaris with less than 10% lipid yields, medium lipid microalgae include but is not limited to Nannochloropsis Salina with about 30% lipid yields, and high lipid microalgae includes but is not limited to Schizochytrium spp. with about 30% or more lipid yields.

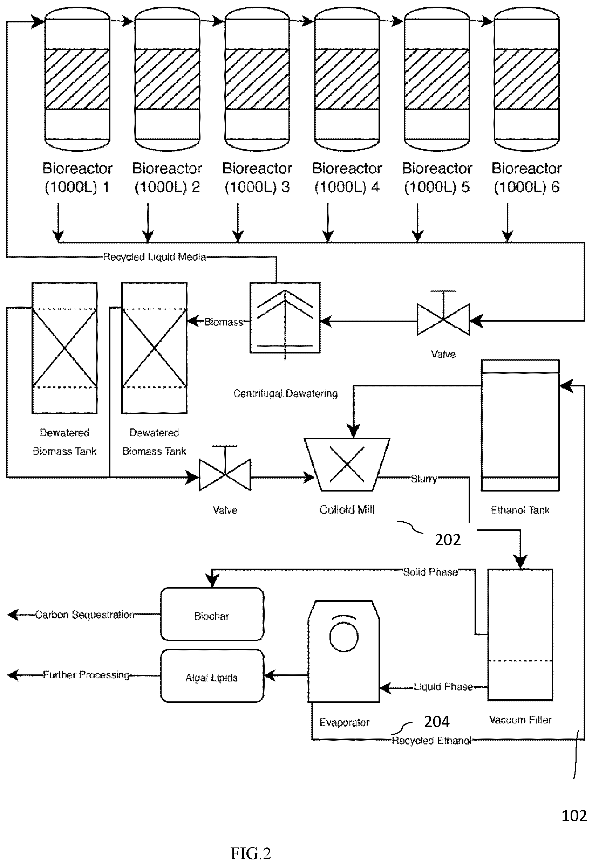

Further, a diagram of method for producing biocrude and bioactive substances from microalgae biomass using a colloidal mill **202** is shown in **FIG.2****.** The method comprises the steps of dewatering algae culture and transferring to storage tanks; adding the dewatered algae biomass to a colloid mill **202** with 95% ethanol; forming algae and ethanol slurry; separating the slurry into liquid and solid phases in a vacuum filter **102;** recycling ethanol and extract lipids of the lipid phase in an evaporator **204;** obtaining a solid phase as biochar for subsequent carbon sequestration.

The present invention could produce high yields of bio-oil comprising 90% long-chain free fatty acids (C14, C16, C18), all of which could be used to produce biofuels. The microalgae extract from the method and system of the present invention also contains glycerine and other bioactive molecules such as DHA and EPA, which are key fatty acids used in omega-3 supplements. These extracts also contain a variety of industrially utilized molecules such as 2-Pyrrolidinone, 1-Piperidinecarboxamide, 1,4-Benzenedicarboxylic acid, bis(2-ethylhexyl) ester, 3-Methyl-1,2-cyclopentanedione, and 3-Isobutylhexahydropyrrolo[1,2-a]pyrazine-1,4-dione. For instance, the said industrially utilized molecules are used in the production of inject cartridges, reactants, PVC ingredients, flavouring agent, and etc.

The present invention explained above is not limited to the aforementioned embodiment and drawings, and it will be obvious to those having an ordinary skill in the art of the prevent invention that various replacements, deformations, and changes may be made without departing from the scope of the invention.

## Claims

1. A method for producing biocrude and bioactive substances from microalgae biomass, comprising the steps of:
mixing and stirring dry microalgae biomass with water and an acid catalyst;
processing the biomass mixture with solvent;
separating lysed algae cells into non-polar extracts from water-soluble extracts via vacuum filtration (102);
washing the lysed algae cells and non-polar extracts with organic solvents;
separating the organic solvent mixture, which comprises ethanol and long-chain fatty acids, from the remaining biochar via vacuum filtration (102); and
separating the ethanol from the fatty acids via distillation or rotary evaporator (204) to extract bio-oil.

2. The method for producing biocrude and bioactive substances from microalgae biomass, according to claim 1, wherein the processing of the biomass mixture with solvent comprises the step of:
heating the biomass mixture at a desired pressure, temperature and time based on each individual microalgae species.

3. The method for producing biocrude and bioactive substances from microalgae biomass, according to claim 1, wherein the processing of the biomass mixture with solvent further comprises the step of:
processing the biomass mixture in a colloidal mill with solvent.

4. The method for producing biocrude and bioactive substances from microalgae biomass, according to claim 1, wherein the mixing of dry microalgae biomass with water is in a ratio of 1:5.

5. The method for producing biocrude and bioactive substances from microalgae biomass, according to claim 1 or 4, wherein the acid catalyst comprises hydrochloric acid and sulfuric acid in water in a ratio of 5:0.08.

6. The method for producing biocrude and bioactive substances from microalgae biomass, according to one of claims 1 to 5, wherein the water-soluble extracts comprise proteins, amino acids, glycerin, and other bioactive molecules.

7. The method for producing biocrude and bioactive substances from microalgae biomass, according to one of claims 1 to 6, wherein the organic solvents comprise ethanol, methanol, and n-hexane in a ratio of 1:1 to 6:1.

8. The method for producing biocrude and bioactive substances from microalgae biomass, according to one of claims 2 to 7, wherein the temperature and time during the heating of the mixture comprise 100-250°C for 10-180 minutes.

9. The method for producing biocrude and bioactive substances from microalgae biomass, according to claim 8, wherein the heating of the mixture takes up to a maximum of 60% of the volume of a pressure vessel's capacity.

10. The method for producing biocrude and bioactive substances from microalgae biomass, according to one of claims 1 to 9, wherein the processing of the biomass mixture with the solvent is optimum in a ratio of 1:2 to 1:7 .

11. A thermal hydrolysis system of microalgae biomass for producing biocrude and bioactive substances, comprising:
a high-pressure vessel and/or a colloidal mill (202);
a vacuum filtration (102); and
a rotary evaporator (204).

12. The thermal hydrolysis system, according to claim 11, wherein the system is configured to conduct an extraction of dry microalgae biomass in an aqueous medium in the high-pressure vessel at 100-250°C for 10-180 minutes to produce bio-oil and bioactive substances.

13. The thermal hydrolysis system, according to claim 11 or 12, wherein the bio-oil comprises 90% long-chain free fatty acids and the bioactive substances comprise glycerin and other bioactive molecules such as docosahexaenoic acid (DHA) and eicosapentaenoic acid (EPA).

14. The thermal hydrolysis system, according to one of claims 11 to 13, wherein the extraction further produces molecules include one or more form a group comprising 2-Pyrrolidinone, 1-Piperidinecarboxamide, 1,4-Benzenedicarboxylic acid, bis(2-ethylhexyl) ester, 3-Methyl-1,2-cyclopentanedione, and 3-Isobutylhexahydropyrrolo[1,2-a]pyrazine-1,4-dione.

15. The system of microalgae biomass for producing biocrude and bioactive substances, according to one of claims 11 to 14, further comprising a storage tank.

16. The system, according to one of claims 11 to 15, wherein the system is configured to conduct an extraction of dry microalgae biomass in an aqueous medium in the colloidal mill (202) to produce bio-oil and bioactive substances wherein the bio-oil comprises 90% long-chain free fatty acids and the bioactive substances comprise glycerin and other bioactive molecules such as docosahexaenoic acid (DHA) and eicosapentaenoic acid (EPA).
